# EUROPEAN PATENT APPLICATION

(11) **EP 4 527 605 A1**
(43) Date of publication of application: **26.03.2025**
(21) Application number: 23807220.1
(22) Date of filing: 12.01.2023
(51) Int. Cl.: B29D 30/54, B29C 73/10

(54) **METHOD FOR PRODUCING REPAIRED PNEUMATIC TIRE**

(30) Priority: 18.05.2022 JP 2022081881
(71) Applicant: BRIDGESTONE CORPORATION, Chuo-ku Tokyo 104-8340 (JP)
(72) Inventor: KYO Soichi, Tokyo 104-8340 (JP); ONISHI Koji, Tokyo 104-8340 (JP)
(74) Representative: Marks & Clerk LLP
(86) International application number: PCT/JP2023/000679
(87) International publication number: WO 2023/223602

(57) **Abstract**

The method for producing a repaired pneumatic tire according to the present disclosure includes: a placement process placing a repair patch, comprising a reinforcement layer consisting of a plurality of reinforcement cords arranged in parallel with each other and surrounded by unvulcanized rubber, on an area to be repaired; and a vulcanization process vulcanizing a tire with the repair patch placed thereon, and in the repaired pneumatic tire, an outer end in the tire radial direction of the repair patch is located on an inner side in the tire width direction than an end of a maximum width belt layer that has the largest width in the tire width direction among the one or more belt layers, and an inner end in the tire radial direction of the repair patch is located on an outer side in the tire radial direction than a tire maximum width position.

## Description

### TECHNICAL FIELD

This disclosure relates to a method for producing a repaired pneumatic tire.

### BACKGROUND

A conventional method for repairing a pneumatic tire has been proposed, in which a repair patch is applied to a pneumatic tire to repair penetrations in the sidewall portion and the tread portion (e.g., PTL 1).

When repairing penetrations in the shoulder portion of a pneumatic tire, if the repair patch is placed so that the end of the patch is located in an area of high tire deformation (specifically, the area from the end of the maximum width belt layer that has the largest width among the belt layers to the tire maximum width position), tire deformation could cause the repair patch to peel off from its ends. Therefore, conventionally, the size of the repair patch was increased so that both ends of the repair patch would be located outside the area of high tire deformation mentioned above.

### CITATION LIST

### Patent Literature

PTL 1: WO 2012/111347

### SUMMARY

### (Technical Problem)

However, the cost of the repair patch increases with the size of the repair patch, so the larger the size of the repair patch, the higher the cost.

It is therefore an object of the present disclosure to provide a method for producing a repaired pneumatic tire in which the size of the repair patch is not increased as much as possible.

### (Solution to Problem)

The gist structure of the present disclosure is as follows.

A method for producing a repaired pneumatic tire, comprising a carcass extending in a toroidal shape between a pair of bead portions and a belt consisting of one or more belt layers disposed on an outer side in the tire radial direction of a crown portion of the carcass, wherein the method includes:
a placement process placing a repair patch, comprising a reinforcement layer consisting of a plurality of reinforcement cords arranged in parallel with each other and surrounded by unvulcanized rubber, on an area to be repaired; and
a vulcanization process vulcanizing a tire with the repair patch placed thereon, and
in the repaired pneumatic tire, an outer end in the tire radial direction of the repair patch is located on an inner side in the tire width direction than an end of a maximum width belt layer that has the largest width in the tire width direction among the one or more belt layers, and an inner end in the tire radial direction of the repair patch is located on an outer side in the tire radial direction than a tire maximum width position.

Here, the "tire maximum width position" refers to the position at which the width in the tire width direction is maximum when a repaired pneumatic tire is mounted on an applicable rim, filled with a prescribed internal pressure, and unloaded.

In addition, the "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the above "rim" includes current sizes as well as sizes that may be listed in the aforementioned industrial standards in the future. An example of the "sizes that may be listed in the future" could be the sizes listed as "FUTURE DEVELOPMENTS" in the ETRTO 2013 edition.). For sizes not listed in these industrial standards, the "applicable rim" refers to a rim with a width corresponding to the bead width of the tire.

In addition, the "prescribed internal pressure" refers to the air pressure (maximum air pressure) corresponding to the maximum load capacity of a single wheel in the applicable size and ply rating, as described in the aforementioned JATMA and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

### (Advantageous Effect)

According to the present disclosure, it is possible to provide a method for producing a repaired pneumatic tire in which the size of the repair patch is not increased as much as possible.

### BRIEF DESCRIPTION OF THE DRAWINGS

In the accompanying drawings:
FIG. 1 is a cross-sectional view in the tire width direction of a repaired pneumatic tire produced by the method for producing a repaired pneumatic tire according to one embodiment of this disclosure;
FIG. 2 is a flowchart of the method for producing a repaired pneumatic tire according to one embodiment of this disclosure; and
FIG. 3 is a schematic drawing illustrating the structure of the repair patch.

### DETAILED DESCRIPTION

Hereinafter, embodiments of the present disclosure will be described in detail with reference to the drawings.

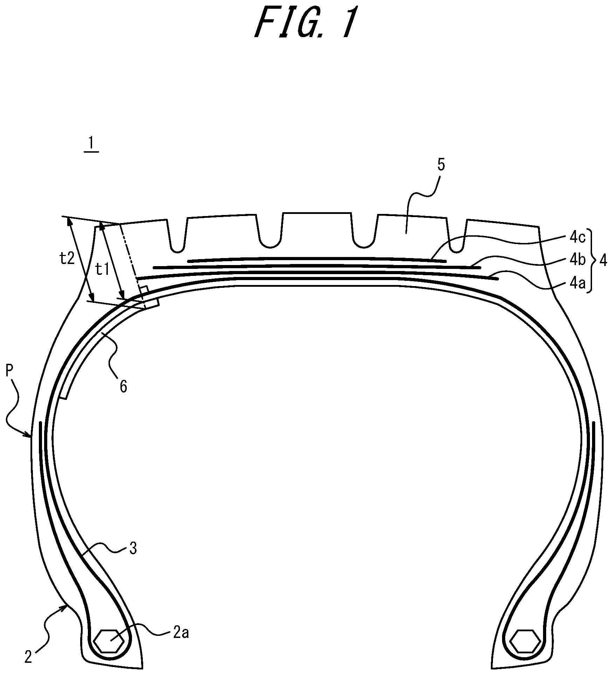

Figure 1 is a cross-sectional view in the tire width direction of a repaired pneumatic tire produced by the method for producing a repaired pneumatic tire according to one embodiment of this disclosure. As illustrated in Figure 1, this repaired pneumatic tire (hereinafter, referred to simply as "tire") 1 comprises a carcass 3 extending in a toroidal shape between a pair of bead portions 2; and a belt 4 consisting of one or more belt layers 4a, 4b, 4c (three layers in the illustrated example) disposed on an outer side in the tire radial direction of a crown portion of the carcass 3 and a tread 5.

A bead core 2a is embedded in each of the pair of bead portions 2. A bead filler may be appropriately disposed on the outer side of the bead core 2a in the tire radial direction. The carcass 3 consists of one or more carcass plies, and the carcass plies can be made of, for example, organic fiber cords. In this example, the carcass 3 consists of a carcass body portion extending in a toroidal shape between the pair of bead portions 2 and carcass turn-up portions that are folded around each of the bead cores 2a from the carcass body portion, respectively. In this example, there are three belt layers, but the number of belt layers can be one or more. In addition, in this example, the inner-most belt layer 4a in the tire radial direction has the largest width in the tire width direction and the outer-most belt layer 4c in the tire width direction has the smallest width, however, the relationship between the width of each belt layer in the tire width direction is not limited to this example and can be changed as needed. The belt cord may be, for example, a steel cord. The inclination angle of the belt cord relative to the tire circumferential direction can be, for example, 30° to 60°. Furthermore, a belt reinforcement layer (for example, a belt reinforcement layer with cords extending in the tire circumferential direction) may be further provided on the outer or inner side in the tire radial direction of the belt 4 as appropriate. The tread 5 is made of tread rubber.

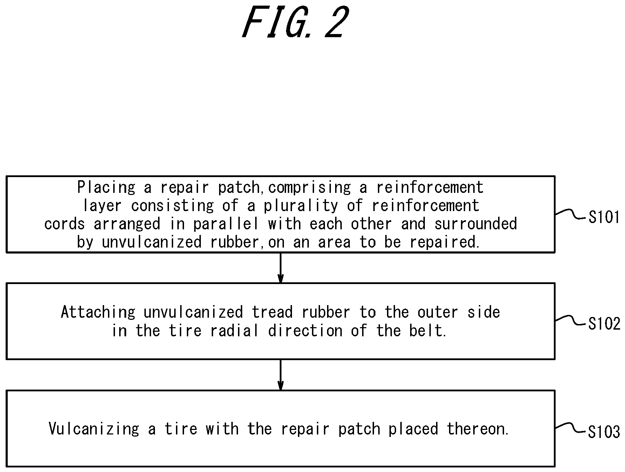

Figure 2 is a flowchart of the method for producing a repaired pneumatic tire according to one embodiment of this disclosure. As illustrated in Figure 2, in this embodiment, a repair patch, comprising a reinforcement layer consisting of a plurality of reinforcement cords arranged in parallel with each other and surrounded by unvulcanized rubber, is placed on an area to be repaired of a pre-repaired pneumatic tire (A placement process: step S101). Next, in this example, unvulcanized tread rubber is attached to the outer side in the tire radial direction of the belt (A tread rubber attachment process: step S102). Note, that the step S102 may be omitted as appropriate. Next, the tire with the repair patch placed thereon is vulcanized (A vulcanization process: step S103). In this embodiment, vulcanization is performed using a mold in the vulcanization process. The mold may have a groove. In addition, in this embodiment, in the vulcanization process, the temperature of the mold during vulcanization is 130 °C to 170 °C, and the pressure of hot water in a vulcanizing bladder is 1.3 MPa to 2.1 MPa.

The repaired pneumatic tire repaired through this process further comprises a repair patch 6 on the inner surface of the tire (inner surface of the inner liner, not illustrated). As illustrated in Figure 1, the outer end in the tire radial direction of the repair patch 6 is located on the inner side in the tire width direction than the end of the maximum width belt layer that has the largest width in the tire width direction among the one or more belt layers (belt layer 3a, in this example), and the inner end in the tire radial direction of the repair patch 6 is located on the outer side in the tire radial direction than the tire maximum width position P.

The effects of the method for producing a repaired pneumatic tire according to this embodiment will be described.

According to the method for producing a repaired pneumatic tire according to this embodiment, since, in the repaired pneumatic tire, the outer end in the tire radial direction of the repair patch 6 is located on the inner side in the tire width direction than the end of the maximum width belt layer that has the largest width in the tire width direction among the one or more belt layers (belt layer 3a, in this example), this method can be used to repair a wide range of repairs, such as a penetration that occurs near the maximum width belt layer. On the other hand, since the inner end in the tire radial direction of the repair patch 6 is located on the outer side in the tire radial direction than the tire maximum width position P, the size of the repair patch can be reduced (compared to the case in which the inner end in the tire radial direction of the repair patch 6 is located on the inner side in the tire radial direction than the tire maximum width position P) and the cost of the repair patch 6 itself can be reduced.

Thus, according to the method for producing a repaired pneumatic tire according to this embodiment, it is possible that the size of the repair patch is not increased as much as possible.

As in the present embodiment, it is preferable to further include, before the vulcanization process, a tread rubber attachment process attaching unvulcanized tread rubber to the outer side in the tire radial direction of the belt. This allows for repairing and retreading at the same time. Note, that the placement process and the tread rubber attachment process mentioned above may be performed either first or simultaneously, however, from the standpoint of workability, it is preferable to perform the placement process first, as in this embodiment.

In addition, in the vulcanization process, as in the present embodiment, it is preferable that: a mold is used; the temperature of the mold during vulcanization is 130 °C to 170 °C; and the pressure of the hot water in the vulcanizing bladder is 1.0 MPa to 2.5 MPa. By performing vulcanization under such high temperature and pressure conditions, sufficient adhesion can be ensured even if the end of the repair patch is located in the area of high tire deformation, from the end of the maximum width belt layer to the maximum tire width position. In other words, the adhesion of the repair patch can be improved by setting the temperature of the mold during vulcanization to 130 °C or higher and the pressure of the hot water in the vulcanizing bladder to 1.0 MPa or higher. On the other hand, from the viewpoint of controlling thermal degradation of rubber, the temperature of the mold during vulcanization is preferably 170 °C or lower. In addition, from the viewpoint of patch formability after vulcanization, the pressure of the hot water in the vulcanizing bladder is preferably 2.5 MPa or less. For the same reasons as above, it is further preferred that the temperature of the mold during vulcanization is between 140 °C and 160 °C.

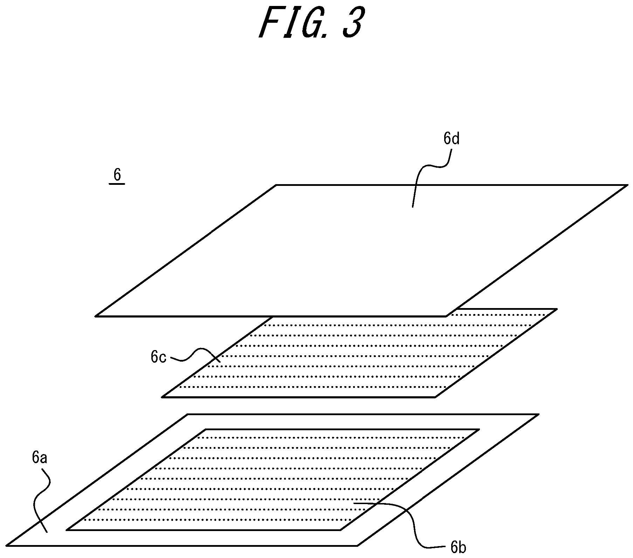

Figure 3 is a schematic drawing illustrating the structure of the repair patch. As mentioned above, the repair patch 6 comprises a reinforcement layer consisting of a plurality of reinforcement cords arranged parallel to each other and surrounded by unvulcanized rubber. The reinforcement cords for the repair patch are not limited, but organic fibers such as nylon PET and aramid can be used. The number of the reinforcement layers in the repair patch is preferably one or more and four or less. This is to prevent defects from occurring during vulcanization. Figure 3 illustrates an example of a repair patch consisting of four reinforcement layers. It should be noted that reinforcing cords for the layers 6a and 6d are not illustrated in the drawings.

For the repaired area, when the pre-repaired tire thickness t1 is 100, the post-repaired tire thickness t2 is preferably between 103 and 125. A value of 103 or higher ensures the effectiveness of the repair, while a value of 125 or lower prevents defects from occurring during vulcanization. The "tire thickness" here refers to the thickness from the tread surface to the inner surface of the tire (or inner surface of the inner liner, if an inner liner is provided) at the repaired area, and the tire thickness shall be measured in a direction normal to the carcass, passing through the belt end of the maximum width belt layer, with the repaired pneumatic tire mounted on the applicable rim, filled with the prescribed internal pressure, and unloaded. In addition, the pre-repaired tire thickness t1 is obtained by subtracting from the post-repaired tire thickness t2 the thickness of the repair patch 6 measured in a direction normal to the carcass, passing through the belt end of the maximum width belt layer in the aforementioned condition.

It should be noted that the application of the repair patch 6 can be done by the same method as before, and is not limited to any particular method, but one example is as follows. First, removing tire rubber and an inner liner around the repair area; filling the repair area with unvulcanized rubber; and then performing the placement process placing a repair patch (step S101).

### REFERENCE SIGNS LIST

- 1: Repaired pneumatic tire
- 2: Bead portion
- 3: Carcass
- 4: Belt
- 5: Tread
- 6: Repair patch

## Claims

1. A method for producing a repaired pneumatic tire, comprising a carcass extending in a toroidal shape between a pair of bead portions and a belt consisting of one or more belt layers disposed on an outer side in the tire radial direction of a crown portion of the carcass, wherein the method includes:
a placement process placing a repair patch, comprising a reinforcement layer consisting of a plurality of reinforcement cords arranged in parallel with each other and surrounded by unvulcanized rubber, on an area to be repaired; and
a vulcanization process vulcanizing a tire with the repair patch placed thereon, and
in the repaired pneumatic tire, an outer end in the tire radial direction of the repair patch is located on an inner side in the tire width direction than an end of a maximum width belt layer that has the largest width in the tire width direction among the one or more belt layers, and an inner end in the tire radial direction of the repair patch is located on an outer side in the tire radial direction than a tire maximum width position.

2. The method for producing a repaired pneumatic tire according to claim 1, wherein the method further includes, before the vulcanization process,
a tread rubber attachment process attaching unvulcanized tread rubber to an outer side in the tire radial direction of the belt.

3. The method for producing a repaired pneumatic tire according to claim 1 or 2, wherein a mold is used in the vulcanization process.

4. The method for producing a repaired pneumatic tire according to claim 3, wherein in the vulcanization process,
a temperature of the mold during vulcanization is 130 °C to 170 °C and a pressure of hot water in a vulcanizing bladder is 1.0 MPa to 2.5 MPa.
